# FASCICULE DE BREVET EUROPEEN

(11) **EP 1 663 741 B1**
(45) Date de publication et mention de la délivrance du brevet: **26.11.2008**
(21) Numéro de dépôt: 04764900.9
(22) Date de dépôt: 07.09.2004
(51) Int. Cl.: B60S 1/24

(54) **MANIVELLE DEFORMABLE DE MECANISME D'ESSUIE-GLACE COMPORTANT UN TROU OBLONG EN FORME DE QUADRILATERE**
VERFORMBARE KURBEL FÜR SCHEIBENWISCHERMECHANISMUS MIT EINEM LÄNGLICHEN, VIERSEITIGEN LOCH
DEFORMABLE CRANK FOR WINDSCREEN WIPER MECHANISM, COMPRISING AN OBLONG QUADRILATERAL HOLE

(30) Priorité: 15.09.2003 FR 0310818
(43) Date de publication de la demande: 07.06.2006
(73) Titulaire: VALEO SYSTEMES D'ESSUYAGE, 78321 La Verrière (FR)
(72) Inventeur: BOISSAC, Jean-Paul, F-86100 Chatellerault (FR); PAIN, Joël, F-86530 Naintre (FR); MEURVILLE, Florent, F-86100 Chatellerault (FR)
(86) Numéro de dépôt international: PCT/EP2004/009957
(87) Numéro de publication internationale: WO 2005/025953

(56) Documents cités:
- EP-A- 0 904 997
- DE-A- 2 647 510
- FR-A- 1 225 534
- FR-A- 2 835 496
- US-A- 2 894 774

## Description

L'invention propose une manivelle appartenant à une tringlerie de mécanisme d'essuie-glace, qui est apte à être déformée élastiquement pour le réglage de l'amplitude du mouvement d'essuyage.

L'invention propose plus particulièrement une appartenant à une tringlerie de transmission de mouvement d'un mécanisme d'essuyage de véhicule automobile, du type comportant un corps qui s'étend dans un plan généralement horizontal, une première extrémité qui est liée en rotation à un bras d'essuyage pivotant autour d'un axe généralement vertical, et une deuxième extrémité articulée sur une bielle de la tringlerie, du type dans laquelle le corps comporte un tronçon apte à être déformé de manière permanente pour régler la distance entre les première et deuxième extrémités de la manivelle, et comportant un trou oblong d'orientation générale longitudinale qui divise le tronçon en deux branches longitudinales déformables, globalement symétriques par rapport à un axe longitudinal médian du tronçon.

On trouve par exemple de tel mécanismes à bielle(s) et à manivelle(s) dans des dispositifs d'entraînement dans lesquels un moteur électrique, éventuellement associé à un réducteur, entraîne en balayage alterné au moins un essuie-glace solidaire d'un arbre d'entraînement qui est monté à rotation par rapport au véhicule.

A l'aide d'un mécanisme à bielle(s) et à manivelle(s), il est par exemple possible de transformer un mouvement rotatif continu de l'arbre de sortie du moteur d'entraînement en un mouvement rotatif alterné de l'arbre d'entraînement de chaque essuie-glace.

La géométrie et la cinématique de ce mécanisme, et notamment la longueur des manivelles détermine la course angulaire de chaque essuie-glace. En modifiant cette géométrie, il est possible d'obtenir, à partir d'un même mouvement de sortie de l'arbre de sortie du moteur, deux courses angulaires différentes pour chacun des deux essuie-glaces.

Il en ressort donc qu'il est particulièrement important de pouvoir bien maîtriser la géométrie du mécanisme et notamment la longueur des bielles et des manivelles qui sont articulées entre elles par des articulations à rotule, mais aussi le positionnement des différents éléments entre eux.

Or, d'un mécanisme à l'autre, il se peut que des dispersions apparaissent dans les différentes dimensions caractéristiques du mécanisme et qu'il en résulte des courses angulaires de l'essuie-glace non satisfaisantes.

Le document FR 02 01367 (numéro de publication FR 2835496 A), déposé au nom du demandeur, décrit une manivelle qui est apte à être déformée de manière permanente pour modifier et régler la distance entre ses deux extrémités.

Dans ce but, un tronçon intermédiaire de la manivelle comporte un trou oblong délimitant deux branches opposées, et en déformant ces branches, il est possible de modifier la longueur de la manivelle.

Selon ce document, les branches sont initialement rectilignes de manière qu'il est nécessaire qu'elles soient préalablement déformées pour qu'il soit possible d'augmenter ultérieurement la distance entre les extrémités de la manivelle. Par ailleurs, il n'est pas possible d'augmenter cette distance au-delà de la distance initiale en sortie de chaîne de fabrication.

De plus, à l'issue de la déformation préalable des branches, celles-ci sont courbées, de sorte que leur redressement est particulièrement complexe.

La modification de la longueur de la manivelle est généralement réalisée lorsque le dispositif d'essuyage est monté sur le véhicule. L'accès à la manivelle est alors peu aisé, ce qui rend encore plus difficile l'étape de réglage de la longueur de la manivelle.

L'invention a pour objet de proposer une manivelle de mécanisme d'essuyage qui permette une augmentation de la distance entre ses extrémités, sans grandes difficultés.

Dans ce but, l'invention propose une manivelle du type décrit précédemment, caractérisé en ce que le trou oblong a globalement la forme d'un quadrilatère dont les deux diagonales sont généralement perpendiculaires, la plus grande diagonale étant confondue avec l'axe principal de symétrie du tronçon, et coupant la petite diagonale en son milieu.

Selon d'autres caractéristiques de l'invention :
- le trou oblong a la forme d'un losange dont la plus grande diagonale est confondue avec l'axe principal du tronçon ;
- l'aire de la section de chaque branche est globalement constante sur la longueur de la branche ;
- l'aire de la section de chaque branche au niveau d'au moins un angle du trou oblong est inférieure à la section transversale verticale de la branche entre les angles du trou oblong ;
- la première extrémité est réalisée dans un tronçon d'extrémité globalement horizontal, et en ce que l'aire de la section transversale de chaque branche est globalement égale à 1/3 de la section du tronçon d'extrémité ;
- le tronçon est décalé longitudinalement vers une extrémité de la manivelle ;
- le tronçon est décalé longitudinalement vers la deuxième extrémité de la manivelle ;
- la paroi verticale interne du trou oblong est incurvée au niveau des angles concaves du trou oblong ;
- la manivelle est réalisée sous la forme d'une plaque plane horizontale.

L'invention propose aussi un mécanisme d'essuyage de véhicule automobile comportant une tringlerie de transmission de mouvement, caractérisé en ce que la tringlerie comporte au moins une manivelle déformable telle que décrite précédemment.

D'autres caractéristiques et avantages de l'invention apparaîtront à lecture de la description détaillée qui suit pour la compréhension de laquelle on se reportera aux figures annexées parmi lesquelles :
- la figure 1 est une représentation schématique en perspective du montage d'un arbre d'entraînement d'un mécanisme d'essuyage qui comporte une manivelle conforme à l'invention ;
- la figure 2 est une représentation schématique en perspective de la manivelle représentée à la figure 1 ;
- la figure 3 est une vue en plan de la manivelle représentée à la figure 2 ;
- la figure 4 est une vue similaire à celle de la figure 2, représentant une variante de réalisation de la manivelle ;
- la figure 5 est une vue similaire à celle de la figure 2, représentant une autre variante de réalisation de la manivelle.

Pour la description de l'invention, on adoptera à titre non limitatif les orientations verticale, longitudinale et transversale selon le repère V, L, T indiqué aux figures.

Dans la description qui va suivre, des éléments identiques, similaires ou analogues seront désignés par les mêmes chiffres de référence.

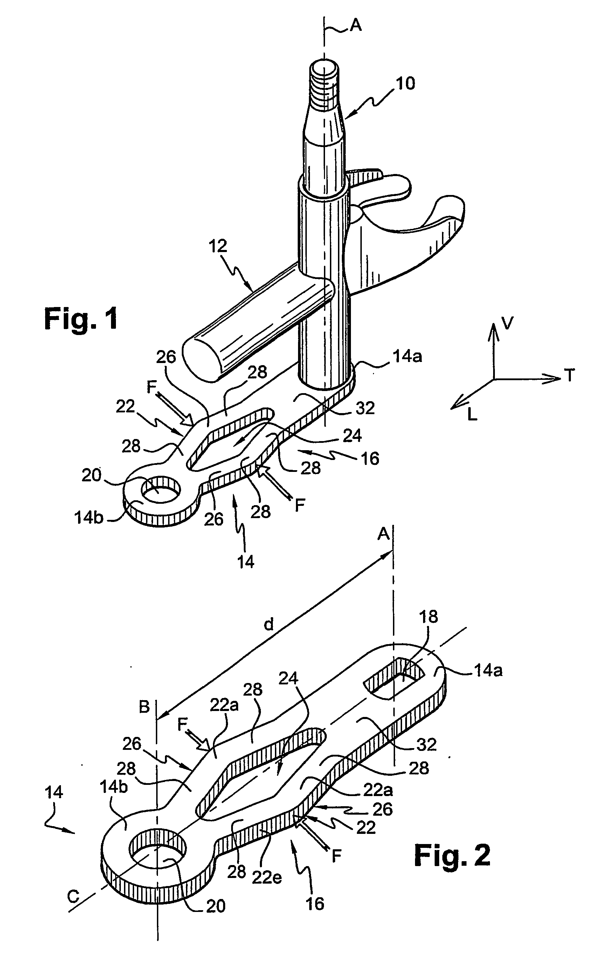

On a représenté à la figure 1 un arbre d'entraînement 10 faisant partie d'un mécanisme d'essuyage de la vitre d'un véhicule automobile (non représentée). l'arbre 10 est guidé dans un mouvement rotatif alterné autour de son axe principal A globalement vertical, par une platine de guidage 12 qui est fixée à un élément de structure de caisse (non représenté) du véhicule.

L'arbre 10 est relié à son extrémité supérieure 10s à un bras d'essuyage (non représenté) et à son extrémité inférieure 10i à une manivelle 14 d'entraînement en mouvement alterné, qui fait partie d'une tringlerie du mécanisme d'essuyage.

Comme on peut le voir plus en détail à la figure 2, la manivelle 14 est un élément plan qui s'étend horizontalement, et elle comporte un corps central 16, une première extrémité 14a qui est reliée à l'arbre 10, et une deuxième extrémité 14b est reliée à une bielle (non représentée) de la tringlerie.

La manivelle 14 est solidaire en rotation de l'arbre 10. A cet effet, sa première extrémité 14a comporte une lumière 18, globalement centrée sur l'axe principal A de l'arbre 10.

La lumière 18 est ici de forme allongée, cependant elle peut être de toute autre forme, de préférence non circulaire. La lumière 18 reçoit l'extrémité inférieure 10i de l'arbre 10, qui est de forme complémentaire, de manière à réaliser la solidarisation en rotation de l'arbre 10 avec la manivelle 14 autour de l'axe vertical A.

La deuxième extrémité 14b de la manivelle 14 est montée articulée sur la bielle de la tringlerie. A cet effet, elle comporte un trou 20 circulaire d'axe principal B confondu avec l'axe principal d'articulation de la manivelle 14 sur la bielle.

Le corps 16 de la manivelle 14 s'étend entre les deux extrémités 14a, 14b, et il est ici globalement rectiligne, d'axe principal de symétrie C d'orientation globalement longitudinale. Cependant, il sera compris que l'invention n'est pas limitée à ce mode de réalisation de la manivelle 14, et que le corps 16 peut ne pas être rectiligne, sans sortir du domaine de l'invention.

Le corps 16 comporte un tronçon déformable 22 qui est apte à être déformé de manière permanente, de manière à pouvoir régler la distance "d" entre les première et deuxième extrémités 14a, 14b de la manivelle c'est-à-dire la distance "d" entre les axes A, B de l'arbre 10 et du trou 20.

A cet effet, le tronçon déformable 22 comporte un trou oblong 24 d'orientation générale longitudinale, qui divise le tronçon déformable 22 en deux branches longitudinales déformables 26, symétriques par rapport à l'axe longitudinal médian C du tronçon déformable 22, c'est-à-dire ici par rapport au plan vertical médian de la manivelle 14.

La déformation du tronçon déformable 22 permet d'augmenter ou de réduire la distance "d" entre les première et deuxième extrémités 14a, 14b de la manivelle 14, et l'amplitude de l'effort nécessaire pour la déformation du tronçon déformable 22, ne doit pas être trop élevée.

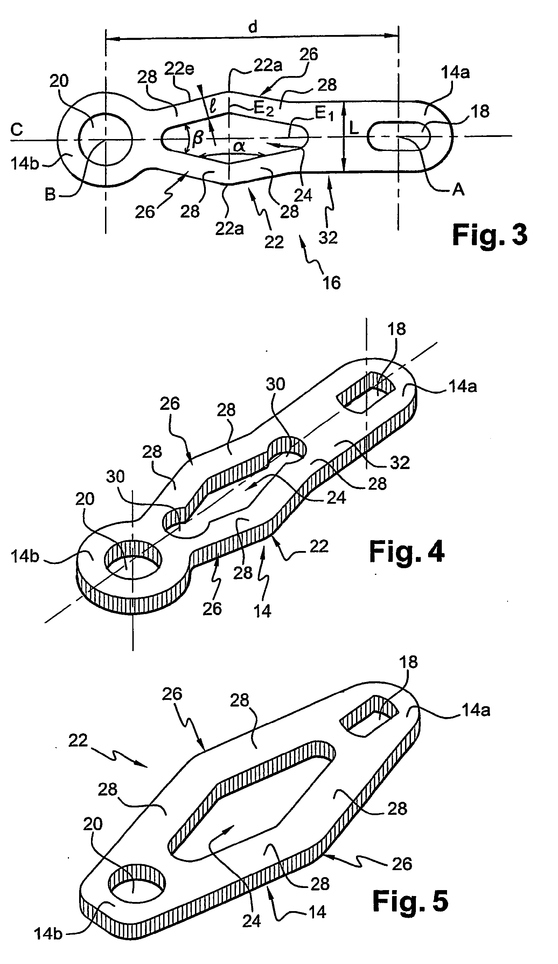

Dans le but, conformément à l'invention, et comme on l'a représenté plus en détail à la figure 3, le trou oblong 24 est conformé de manière à un corps d'un quadrilatère dont les deux diagonales E1, E2 sont perpendiculaires. Selon l'invention, la plus grande diagonale E1 du trou oblong 24 est confondue avec l'axe longitudinal médian C du tronçon de longueur réglable 22, et elle coupe la petite diagonale E2 du trou oblong 24 en son milieu.

Conformément à un mode de réalisation préféré de l'invention, le trou oblong 24 à la forme d'un losange, c'est-à-dire que ses deux diagonales E1, E2 sont sécantes en leurs milieux respectifs, et l'aire de la section transversale de chaque branche 26 est constante sur toute la longueur de la branche 26.

Ainsi, la paroi verticale externe 22e du tronçon déformable 22 a elle aussi la forme d'un losange dont la plus grande diagonale est confondue avec l'axe longitudinal médian C du tronçon déformable 22, et dont les angles 22a situés à chaque extrémité de la petite diagonale font saillie transversalement vers l'extérieur par rapport au corps 16 de la manivelle 14.

L'opération de déformation du tronçon déformable 22, permettant d'augmenter la distance "d", consiste à appliquer un effort F au niveau de chaque angle 22a du tronçon déformable 22 qui est situé à une extrémité de la petite diagonale du losange. Les deux efforts F sont opposés et ils ont pour effet de rapprocher les deux angles ou sommets 22a du tronçon déformable 22, c'est-à-dire qu'ils ont pour effet de réduire la longueur de la petite diagonale E2 du trou oblong 24.

Puisque le les branches 26 ont une section constante sur toute leur longueur, la forme en losange du trou oblong 24, implique que chaque branche 26 est composée de deux tronçons consécutifs 28 qui sont inclinés l'un par rapport à l'autre d'un angle obtus "α", et qui forment chacun un côté du losange délimitant le trou oblong 24.

Au cours de la déformation du tronçon déformable 22, les tronçons 28 restent rectilignes, les déformations ont alors lieu au niveau de chaque extrémité des tronçons 28, c'est-à-dire à chaque angle du trou oblong 24. Ainsi, lors de la déformation du tronçon déformable 22 pour obtenir une augmentation de la distance "d", l'angle obtus "α", qui est formé à chaque extrémité de la petite diagonale E2, et qui est délimité par les deux tronçons 28 d'une même branche 26 augmente, et l'angle aigu "β" qui est délimité par deux tronçons 28 consécutifs appartenant chacun à l'une des deux branches 26, au niveau de chaque extrémité de la grande diagonale E1 diminue.

Pour limiter les contraintes internes subies par le tronçon déformable 22 après sa déformation, la paroi verticale interne du trou oblong 24 est incurvée au niveau des angles concaves du trou oblong 24, c'est-à-dire à l'intersection de deux tronçons 28 consécutifs des deux branches 26.

Selon un mode de réalisation préféré de l'invention, la manivelle 14 est réalisée sous la forme d'une plaque plane horizontale.

Ainsi, la manivelle 14 a une épaisseur constante sur toute sa surface. De ce fait, la caractéristique de la manivelle 14 selon laquelle l'aire de la section de chaque branche 26 est constante sur toute la longueur de la branche 26, signifie que la dimension transversale "1" de chaque branche 26 est constante sur toute la longueur de la branche 26.

On a représenté à la figure 4 une variante de réalisation de l'invention selon laquelle les branches 26 comportent des zones 30 de faible résistance à la déformation, qui permettent de réduire la valeur des efforts F à appliquer sur le tronçon déformable 22 pour sa déformation.

Selon un mode de réalisation préféré de cette variante, les zones 30 de faible résistance à la déformation sont agencées au niveau des angles ou sommets du trou oblong 24, ce qui permet que les tronçons 28 de la manivelle restent rectilignes.

Les zones 30 de faible résistance à la déformation sont des zones pour lesquelles l'aire de la section de la branche 26 associée au niveau de l'angle considéré du trou oblong 24 est inférieure à l'aire de la section transversale de la branche 24 entre les angles du trou oblong 24.

Ici, les zones de faible résistance à la déformation sont agencées au niveau dés deux angles du trou oblong 24 situés aux extrémités de la grande diagonale E1 du trou oblong 24, et elles consistent globalement en deux perforations cylindriques 30 de révolution d'axe vertical, qui traversent la manivelle 14.

Du fait de la présence du oblong 24, la résistance mécanique de la manivelle 14 est réduite au niveau du tronçon déformable 22. La manivelle 14 étant principalement soumise à un couple résistant autour de l'axe A provenant de l'arbre 10, et à un effort globalement transversal provenant de la bielle, qui est appliqué au niveau du centre du deuxième trou 20 de la deuxième extrémité 14b de la manivelle 14, il est particulièrement avantageux de décaler longitudinalement le tronçon déformable 22, pour que celui-ci soit soumis à des efforts moins importants.

Ainsi, le tronçon déformable 22 est soumis à des efforts moins importants lorsqu'il est décalé longitudinalement vers la deuxième extrémité 14b de la manivelle 14.

Les dimensions des branches 26, et plus particulièrement l'aire de la section transversale de chaque branche 26, permettent de déterminer la résistance mécanique du tronçon déformable 22 à ces efforts, et donc la résistance mécanique de la manivelle 14.

C'est pourquoi, selon un mode de réalisation préféré de l'invention, l'aire de la section transversale de chaque branche 26 est globalement égale à un tiers de l'aire de la section transversale d'un deuxième tronçon 32 du corps 16 de la manivelle 14, qui prolonge longitudinalement le tronçon déformable 22. C'est-à-dire ici, puisque la manivelle 14 est réalisée sous la forme d'une plaque plane horizontale, que la dimension transversale "1" d'une branche 26 est égale à un tiers de la dimension transversale "L" du deuxième tronçon 32.

On a représenté à la figure 5 une autre variante de réalisation de la manivelle 14, selon laquelle le profil externe de la manivelle 14 a lui aussi la forme d'un losange, ce qui permet d'accroître la rigidité de la manivelle 14.

La manivelle conforme à l'invention permet de modifier sa longueur totale de façon permanente, afin de régler l'angle de balayage du bras d'essuyage.

Une telle manivelle est de conception relativement simple, et l'étape de modification de sa longueur peut être mise en oeuvre simplement sur le poste de montage.

## Revendications

1. Manivelle (14) appartenant à une tringlerie de transmission de mouvement d'un mécanisme d'essuyage de véhicule automobile, du type comportant un corps (16) qui s'étend dans un plan généralement horizontal, une première extrémité (14a) qui est liée en rotation à un bras d'essuyage pivotant autour d'un axe généralement vertical (A), et une deuxième extrémité (14b) articulée sur une bielle de la tringlerie,
du type dans laquelle le corps (16) comporte un tronçon (22) apte à être déformé de manière permanente pour régler la distance entre les première et deuxième extrémités (14a, 14b) de la manivelle (14), et comportant un trou oblong (24) d'orientation générale longitudinale qui divise le tronçon (22) en deux branches (26) longitudinales déformables, globalement symétriques par rapport à un axe longitudinal médian du tronçon (22),
**caractérisé en ce que** le trou oblong (24) a globalement la forme d'un quadrilatère dont les deux diagonales (E1, E2) sont généralement perpendiculaires, la plus grande diagonale (E1) étant confondue avec l'axe principal (C) de symétrie du tronçon (22), et coupant la petite diagonale (E2) en son milieu.

2. Manivelle (14) selon la revendication précédente, **caractérisé en ce que** le trou oblong (24) a la forme d'un losange dont la plus grande diagonale (E1) est confondue avec l'axe principal (C) du tronçon (22).

3. Manivelle (14) selon l'une des revendications précédentes, **caractérisé en ce que** l'aire de la section de chaque branche (26) est globalement constante sur la longueur de la branche (26).

4. Manivelle (14) selon la revendication précédente, **caractérisé en ce que** l'aire de la section de chaque branche (26) au niveau d'au moins un angle du trou oblong (24) est inférieure à la section transversale verticale de la branche (26) entre les angles du trou oblong (24).

5. Manivelle (14) selon l'une quelconque des revendications 3 ou 4, **caractérisé en ce que** la première extrémité (14a) est réalisée dans un tronçon d'extrémité (32) globalement horizontal, et **en ce que** l'aire de la section transversale de chaque branche (26) est globalement égale à 1/3 de la section du tronçon d'extrémité (32).

6. Manivelle (14) selon l'une quelconque des revendications précédentes, **caractérisé en ce que** le tronçon (22) est décalé longitudinalement vers une extrémité (14a, 14b)) de la manivelle (14).

7. Manivelle (14) selon la revendication précédente, **caractérisé en ce que** le tronçon (22) est décalé longitudinalement vers la deuxième extrémité (14b) de la manivelle (14).

8. Manivelle (14) selon l'une quelconque des revendications précédentes, **caractérisé en ce que** la paroi verticale interne du trou oblong (24) est incurvée au niveau des angles concaves du trou oblong (24).

9. Manivelle (14) selon l'une quelconque des revendications précédentes, **caractérisé en ce qu'**elle est réalisée sous la forme d'une plaque plane horizontale.

10. Mécanisme d'essuyage de véhicule automobile comportant une tringlerie dé transmission de mouvement, **caractérisé en ce que** la tringlerie comporte au moins une manivelle (14) déformable selon l'une quelconque des revendications précédentes.

## Claims

1. A crank (14) belonging to the linkage for transmitting the motion of a motor vehicle wiper mechanism, of the type including a body (16) which extends in a generally horizontal plane, a first end (14a) which is connected in rotation to a wiping arm pivoting about a generally vertical axis (A) and a second (14b) connecting rod of the linkage,
of the type wherein the body (16) includes a segment (22) capable of being permanently deformed to adjust the distance between the first and the second ends (14a, 14b) of the crank (14), and including an oblong hole (24) following a general longitudinal orientation which separates the segment (22) into two deformable longitudinal branches (26) which are globally symmetrical with respect to a middle longitudinal axis of the segment (22),
**characterised in that** the oblong hole (24) substantially has a quadrilateral shape both diagonals of which (E1, E2) are generally perpendicular, the longer diagonal (E1) being superimposed with the main symmetry axis (C) of the segment (22) and intersecting the smaller diagonal (E2) in the middle thereof.

2. A crank (14) according to the preceding claim, **characterised in that** the oblong hole (24) has a diamond shape, and the longer diagonal (E1) is superimposed with the main axis (C) of the segment (22).

3. A crank (14) according to one of the preceding claims, **characterised in that** the sectional area of each branch (26) is substantially constant with respect to the length of the branch (26).

4. A crank (14) according to the preceding claim, **characterised in that** the sectional area of each branch (26) at the level of at least one angle of the oblong hole (24) is smaller than the vertical cross-section of the branch (26) between the angles of the oblong hole (24).

5. A crank (14) according to any one of claims 3 or 4, **characterised in that** the first end (14a) is made in a substantially horizontal end segment (32) and **in that** the cross-section area of each branch (26) is substantially equal to 1/3 of the section of the end segment (32).

6. A crank (14) according to any one of the preceding claims, **characterised in that** the segment (22) is longitudinally shifted towards an end (14a, 14b) of the crank (14).

7. A crank (14) according to the preceding claim, **characterised in that** the segment (22) is longitudinally shifted towards the second end (14b) of the crank (14).

8. A crank (14) according to any one of the preceding claims, **characterised in that** the inner vertical wall of the oblong hole (24) is curved at the level of the concave angles of the oblong hole (24).

9. A crank (14) according to any one of the preceding claims, **characterised in that** it is made in the form of a horizontal planar plate.

10. A mechanism for wiping a motor vehicle including a linkage for transmitting a motion, **characterised in that** the linkage includes at least one deformable crank (14), according to any one of the preceding claims.

## Patentansprüche

1. Kurbel (14), die zu einem Gestänge für die Bewegungsübertragung eines Wischermechanismus eines Kraftfahrzeugs gehört, von der Art, die einen Körpers (16) umfaßt, der sich auf einer im allgemeinen horizontalen Ebene erstreckt, ein erstes Ende (14a), das in Drehung mit einem Wischarm verbunden ist, der um eine im allgemeinen senkrechte Achse (A) dreht, und ein zweites Ende (14b), das auf der Stange des Gestänges gelenkig verbunden ist,
von der Art, bei der der Körper (16) einen Abschnitt (22) umfaßt, der geeignet ist, ständig verformt zu werden, um den Abstand zwischen dem ersten und dem zweiten Ende (14a, 14b) der Kurbel (14) zu regeln, und der ein längliches Loch (24) zur allgemeinen Längsausrichtung umfaßt, das den Abschnitt (22) in zwei verformbare Längszweige (26) teilt, die insgesamt symmetrisch im Verhältnis zu einer medianen Längsachse des Abschnitts (22) sind,
**dadurch gekennzeichnet, daß** das längliche Loch (24) insgesamt die Form eines unregelmäßigen Vierecks hat, dessen beiden Diagonale (E1, E2) im allgemeinen senkrecht zueinander stehen, wobei die größte Diagonale (E1) mit der Hauptsymmetrieachse (C) zusammenfällt des Abschnitts (22) zusammenfällt und die kleine Diagonale (E2) in ihrer Mitte schneidet.

2. Kurbel (14) nach dem vorstehenden Anspruch, **dadurch gekennzeichnet, daß** das längliche Loch (24) die Form einer Raute hat, deren größere Diagonale (E1) mit der Hauptachse (C) des Abschnitts (22) zusammenfällt.

3. Kurbel (14) nach einem der vorstehenden Ansprüche, **dadurch gekennzeichnet, daß** der Platz des Abschnitts jedes Zweigs (26) insgesamt über die Länge des Zweigs (26) konstant ist.

4. Kurbel (14) nach dem vorstehenden Anspruch, **dadurch gekennzeichnet, daß** der Platz des Abschnitts jedes Zweigs (26) in Höhe von mindestens einer Ecke des länglichen Lochs (24) geringer als der vertikale Querabschnitt des Zweigs (26) zwischen den Ecken des länglichen Lochs (24) ist.

5. Kurbel (14) nach einem beliebigen der vorstehenden Ansprüche 3 oder 4, **dadurch gekennzeichnet, daß** das erste Ende (14a) in einem insgesamt horizontalen Endabschnitt (32) ausgeführt ist, und **dadurch**, daß der Platz des Querabschnitts jedes Zweigs (26) insgesamt gleich einem Drittel des Abschnitts des Endabschnitts (32) ist.

6. Kurbel (14) nach einem beliebigen der vorstehenden Ansprüche, **dadurch gekennzeichnet, daß** der Abschnitt (22) längs zu einem Ende (14a, 14b) der Kurbel (14) verschoben ist.

7. Kurbel (14) nach dem vorstehenden Anspruch, **dadurch gekennzeichnet, daß** der Abschnitt (22) längs zum zweiten Ende (14b) der Kurbel (14) verschoben ist.

8. Kurbel (14) nach einem beliebigen der vorstehenden Ansprüche, **dadurch gekennzeichnet, daß** die vertikale innere Wand des länglichen Lochs (24) an den konkaven Ecken des länglichen Lochs (24) gekrümmt ist.

9. Kurbel (14) nach einem beliebigen der vorstehenden Ansprüche, **dadurch gekennzeichnet, daß** sie in Form einer horizontalen ebenen Platte ausgeführt ist.

10. Wischmechanismus für Kraftfahrzeug, der ein Gestänge für die Bewegungsübertragung umfaßt, **dadurch gekennzeichnet, daß** das Gestänge mindestens eine verformbare Kurbel (14) umfaßt, gemäß eines beliebigen der vorstehenden Ansprüche.
